# EUROPEAN PATENT SPECIFICATION

(11) **EP 1 764 429 B1**
(45) Date of publication and mention of the grant of the patent: **20.10.2010**
(21) Application number: 05748466.9
(22) Date of filing: 02.06.2005
(51) Int. Cl.: G06T 11/00, D02G 3/04

(54) **YARN IMAGE FORMING APPARATUS FOR MELANGE YARN, METHOD OF FORMING YARN IMAGE THEREWITH, AND PROGRAM THEREFOR**
GARNBILDERSTELLUNGSVORRICHTUNG FÜR MELANGEGARN, VERFAHREN ZUR HERSTELLUNG EINES GARNBILDS UNTER DEREN VERWENDUNG SOWIE PROGRAMM DAFÜR
APPAREIL POUR CRÉER DES IMAGES DE FIL POUR FIL MÉLANGÉ, MÉTHODE POUR CRÉER DES IMAGES DE FIL AVEC, ET SON PROGRAMME

(30) Priority: 07.06.2004 JP 2004168941
(43) Date of publication of application: 21.03.2007
(73) Proprietor: SHIMA SEIKI MANUFACTURING, LTD., Wakayama-shi, Wakayama 641-0003 (JP)
(72) Inventor: MAEIWA, Tetsuji, Wakayama-shi, Wakayama 641-0003 (JP)
(74) Representative: Emde, Eric
(86) International application number: PCT/JP2005/010546
(87) International publication number: WO 2005/121422

(56) References cited:
- EP-A- 0 578 975
- EP-A- 0 704 775
- EP-A- 0 768 416
- WO-A1-03/032204

## Description

### TECHNICAL FIELD

This invention relates to the creation of an image of mélange yarn.

### BACKGROUND ART

Melange yarn is a yarn in which a plurality of types of fiber having different colors are mixed together. At present, the only way to know the color and texture of the mélange yarn that will be obtained by mixing together certain fiber colors in certain ratios is through a process of trial and error in which fibers are actually mixed together to create a mélange yarn. Hence, a large number of trial mélange yarns must be created to obtain a single mélange yam.

In addition to a mélange yarn design and a trial product, an image of the mélange yarn is required in a simulation of a fiber product using the planned mélange yarn. For example, to simulate a knitted product which uses mélange yarn such that the color and loop shape of the mélange yarn is expressed rather than knitting data, an image of the mélange yarn is required. If the mélange yarn actually exists, an image thereof can be read by a scanner, appropriately reduced, and copied to the fiber product simulation image. However, to simulate a fiber product which uses mélange yarn during the design process, prior to test production of the mélange yam, an image of the mélange yarn must be created. Note that WO 03/032203 relates to yarn image simulation, whereas EP-A-0 578 975 discloses a method and apparatus for assessing the effect of yarn manufacturing defects in a textile knitted therefrom. The yarn characteristics (e.g. mass, fluffiness and structure) associated with its volume and/or surface are first measured and transformed into grey or colour values to be attributed to pixels. These grey or colour values are used to simulate the yarn as spun around a frame in a number of different and selectable ways, said frame being a paradigm inspired by the physical frames traditionally used for evaluating the appearance of physical yarn. In the computer simulation said frame can be made transparent.

### DISCLOSURE OF THE INVENTION

A basic object of this invention is to create a realistic image of a mélange yarn without actually creating the mélange yam.
Another object of this invention is to facilitate transparency processing required to synthesize the colors between vertically overlapping fibers.
An additional object of this invention is to enable depiction of the degree of mixing of fibers having different colors on a yarn image.

A mélange yarn image creation apparatus according to this invention is an apparatus for creating a mélange yarn image, comprising means for providing a plurality of vertically overlapping image layers in which a plurality of types of fiber having different colors and a predetermined transparency are disposed at random, and means for creating the mélange yarn image by image-synthesizing the vertically overlapping image layers in accordance with the transparency of each of the fiber types.

The mélange yarn image creation apparatus preferably further comprises means for determining the transparency of each of the fiber types using a value of each fiber type and as an increasing function of the value.

Also, the mélange yarn image creation apparatus preferably further comprises means for modifying a resolution of the yarn image in the image layers such that a yarn image in which the fiber types are mixed evenly is created by relatively increasing the resolution of the yarn image, and a yarn image in which the fiber types are mixed unevenly is created by relatively reducing the resolution of the yarn image.

A mélange yarn image creation method according to this invention is a method for creating a mélange yarn image, comprising the steps of providing a plurality of vertically overlapping image layers in which a plurality of types of fiber having different colors and a predetermined transparency are disposed at random, and creating the mélange yarn image by image-synthesizing the vertically overlapping image layers in accordance with the transparency of each of the fiber types.

The transparency of each of the fiber types is preferably determined using a value of each fiber type and as an increasing function of the value.

A mélange yarn image creation program according to this invention is a program for creating a mélange yarn image, comprising a command for providing a plurality of vertically overlapping image layers in which a plurality of types of fiber having different colors and a predetermined transparency are disposed at random, and a command for creating the mélange yarn image by image-synthesizing the vertically overlapping image layers in accordance with the transparency of each of the fiber types.

In the apparatus, method, and program for creating a mélange yarn image according to this invention, a yarn image is constituted by a synthesized image of a plurality of layers, and therefore the color and texture produced by the overlapping fibers on the upper layer and lower layer of the yarn can be depicted. As a result, a realistic yarn image is obtained. The yarn image can be recreated easily by varying the mixing ratios and colors of the fibers, and therefore a mélange yarn evaluation can be performed during the mélange yarn design process without actually mixing together base fibers to create the mélange yam. As a result, the mélange yarn design process is facilitated. Moreover, the created yarn image may be used in a simulation of a fiber product using the mélange yam, and hence a simulation of a fiber product using the mélange yarn can be performed without actually creating the mélange yam.

Note that with respect to the inventions described in the claims and the description of the embodiment, description relating to the yarn image creation apparatus is equally applicable to the yarn image creation method and creation program, and likewise description relating to the creation method is equally applicable to the yarn image creation apparatus and creation program. Furthermore, in this specification the term "at random" means that the fibers of each fiber type appear irregularly, and does not exclude a case in which fibers of the same type are gathered together to a certain degree or the like.

The fiber transparency may be input manually for each fiber type, for example, but by transforming the fiber value into the fiber transparency using a transformation table or the like, the work required to input the transparency can be eliminated. In the case of real fibers, bright colors and nearly white colors often have a high transparency, while dark colors with a low value and nearly black colors often have a low transparency. Hence, by determining the transparency as an increasing function of the value, the transparency can be determined automatically from the value, i.e. the inherent image data of the fibers. In this specification, it is assumed that the lower layer image appears increasingly more clearly as the transparency increases.

In mélange yam, the plurality of types of base fiber may be mixed sufficiently evenly or less evenly, and the color and texture of the mélange yarn differs depending on whether or not the fibers have been untangled and mixed sufficiently. In order to depict the degree of fiber mixing, the randomness of the fiber arrangement on each layer may be varied such that a sufficiently random arrangement (in which few blocks of fibers of the same type exist) corresponds to a well-mixed yarn and a less random arrangement corresponds to a less well-mixed yarn including parts where fiber of the same type are gathered together. However, by varying the logical pixel count in the circumferential direction of the yarn such that the logical pixel count is reduced when the degree of mixing is low, blocks of fibers of the same type can be depicted, and by varying the logical pixel count in the circumferential direction of the yarn such that the logical pixel count is increased when the degree of mixing is high, a yarn in which the plurality of fiber types are mixed sufficiently evenly can be depicted.

### BRIEF DESCRIPTION OF THE DRAWINGS

Fig. 1 is a block diagram of a yarn image creation apparatus according to an embodiment;
Fig. 2 is a flowchart showing a yarn image creation method according to this embodiment;
Fig. 3 is a block diagram showing a yarn image creation program according to this embodiment;
Fig. 4 is a view showing non-smoothing reduction performed during reduction of a created yarn image for a loop simulation;
Fig. 5 is a characteristic diagram showing the transformation of value to transparency in this embodiment;
Fig. 6 is a view showing yarn shape data input from a scanner;
Fig. 7 is a view showing the base fibers of the mélange yarn and mixing ratios thereof;
Fig. 8 is a view showing each layer of the mélange yarn image, created by allocating the colors of the base fibers in the fiber direction and twisting the fibers;
Fig. 9 is a view showing an image obtained by synthesizing the four layers in Fig. 8;
Fig. 10 is a view showing an image obtained by performing shadowing and smoothing on the image in Fig. 9;
Fig. 11 is a view obtained by adding fluff to the image in Fig. 10;
Fig. 12 is a view showing the yarn image (upper portion) created in this embodiment and a simulation image of a plain stitch loop using the yarn image;
Fig. 13 is a view showing a yarn image (upper portion) created using the prior art and a simulation image of a plain stitch loop using this yarn image;
Fig. 14 is a view showing variation in the yarn image and loop simulation image when the resolution of the yarn image is modified; and
Fig. 15 is a view showing images of double twist and triple twist mélange yarn created in this embodiment.

### DESCRIPTION OF REFERENCE NUMERALS

- 2: yarn image creation apparatus
- 4: fiber data storage unit
- 6: transparency calculation unit
- 8: input interface
- 10: yarn image creation program
- 12: yarn shape data storage unit
- 14: fluff model storage unit
- 16: color printer
- 18: color display unit
- 20: output interface
- 22: layer image storage unit
- 24: fluff image storage unit
- 26: image processing unit
- 27: image synthesis unit
- 28: shadowing/smoothing processing unit
- 29: fluff addition unit
- 32: yarn image storage unit
- 34: reduction processing unit
- 36: knit design unit
- 38: loop simulation unit
- 40: yarn shape data input command
- 42: fiber data input command
- 44: layer image creation command
- 46: transparency calculation command
- 48: image synthesis command
- 50: fluff addition command
- 52: reduction command
- 60: yarn image
- 62: loop image

### BEST MODE FOR CARRYING OUT THE INVENTION

A best mode for carrying out this invention will be described below. Embodiment

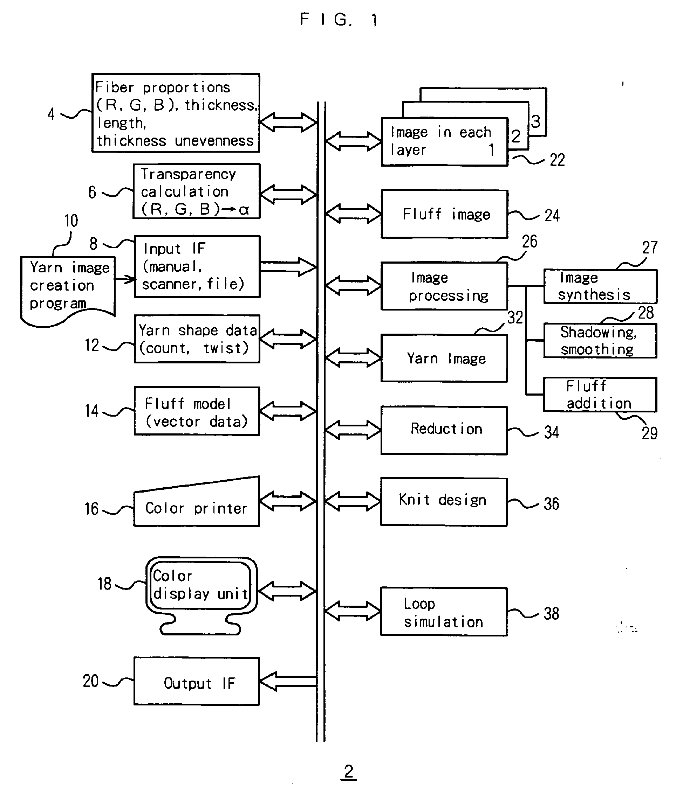

Figs. 1 to 15 show an embodiment. In these drawings, 2 is a yarn image creation apparatus, and 4 is a fiber data storage unit which stores parameters relating to base fibers. The fiber data storage unit 4 stores the ratios of the base fibers used in a mélange yarn, color data relating thereto, the thickness, length, and thickness dispersion thereof, the degree of distribution unevenness in the base fibers, indicating whether the fibers are sufficiently untangled and mixed evenly or the base fibers are mixed unevenly, and so on. Note that in this specification, color data are stored as (R, G, B), for example, but the color data may be stored as a hue H, a value V, a saturation C, and so on. Furthermore, in this specification a symbol α is used for the transparency, and as the value of α increases, the transparency of the lower layer images increases.

In this invention, the transparency α is used to express vertical overlap between fibers having different color data. The transparency is preferably determined for each fiber type, for example, but since it is troublesome to input the transparency of each fiber type, the value of the fiber is approximated by the transparency α. The value V is determined by a transparency calculation unit 6 from the (R, G, B) data, and the transparency α is calculated as a monotonically increasing function thereof. 8 denotes an input interface into which the fiber ratio, thickness, length, thickness dispersion, degree of fiber mixing, and so on are input manually, yarn shape data and the like are input from a scanner not shown in the drawings, and files such as a yarn image creation program 10 are file-input. A yarn shape data storage unit 12 stores the yarn shape data read by the scanner, for example, and may also store yarn main body shape data obtained by removing fluff from the shape data. When reading the yarn shape data, mélange yarn does not have to be read, and a normal yarn image may be read by the scanner. Instead of reading the yarn shape data using the scanner, the count and twist of the yam, the type of yam, and so on may be input, converted into yarn shape data, and stored.

14 denotes a fluff model storage unit. The yarn shape data comprise a yarn main body and peripheral fluff, and the fluff model storage unit 14 stores an image of the fluff. Each fiber of the fluff is preferably vectorized and stored as vector data. When the mélange yarn is formed from three types of fiber, for example, the fluff model may be divided into three, and instead of storing a fluff model as vector data, the divided fluff models for each fiber type may be stored such that the final fluff model is obtained by synthesizing the three fluff models. In this case, approximately two to four types of fiber constitute the mélange yam, and therefore a fluff model divided into two, a fluff model divided into four, and so on are stored in addition to a fluff model divided into three. Further, a plurality of fluff model types are preferably stored in accordance with the fluff pile and so on.

16 is a color printer which outputs created yarn images, loop simulation images, and so on. 18 is a color display unit which displays the created yarn images and loop simulation images. 20 is an output interface which outputs an image file of a created yarn image, design data of a fiber product, a loop simulation image, and so on.

22 is a layer image storage unit for storing layer images obtained by dividing the yarn main body of the yarn image into a plurality of, for example three or four, layers. The images are stored in an (R, G, B) format, for example, and the number of stored layers is between two and four, for example. A fluff image storage unit 24 stores a fluff image of mélange yarn comprising a plurality of types of fiber. When the fluff model is converted into vector data, for example, a single vector corresponds to a single fiber, and color data for a single fiber are allocated to each vector and stored in the fluff image storage unit 24. In parts of the fluff image where fluff overlaps, an average value of the color data for the vertically overlapping fibers may be used, for example. Alternatively, similarly to the yarn main body, the color data overlap of the upper and lower fibers may be determined by determining the transparency of the fiber in accordance with the value thereof. In this case, the transparency in the fluff is preferably set to be equal to or greater than the transparency of the same fiber type in the yarn main body. Further, in a case where the fluff model is formed by dividing the fluff into fiber types and superposing the divided types, the transparency may be allocated to each layer of fluff.

26 is an image processing unit comprising an image synthesis unit 27 for image-synthesizing the images stored in the layer image storage unit 22, a shadowing/smoothing processing unit 28 for implementing shadowing on the image-synthesized yarn image such that a central portion of the yarn image in a lengthwise direction is light and the upper and lower ends are dark, and also for implementing smoothing, and a fluff addition unit 29 for incorporating the fluff image into the yarn image following shadowing and smoothing thereof. Note that the shadowing/smoothing processing unit 28 need not be provided. 32 is a yarn image storage unit for storing the created mélange yarn image. 34 is a reduction processing unit for reducing the yarn image with substantially no smoothing when the yarn image is to be reduced and used in a fiber product simulation such as a loop simulation.

The yarn image creation apparatus 2 has a knitted product design function and a loop simulation function. 36 is a knit design unit which inputs a knitted product design from the input interface 8 or the like and converts the design into knitting data. In a loop simulation unit 38, a loop simulation is performed by creating an image depicting a yarn loop in accordance with the knitting data. The yarn image used in the loop simulation is obtained by reducing the image stored in the yarn image storage unit 32 using the reduction processing unit 34.

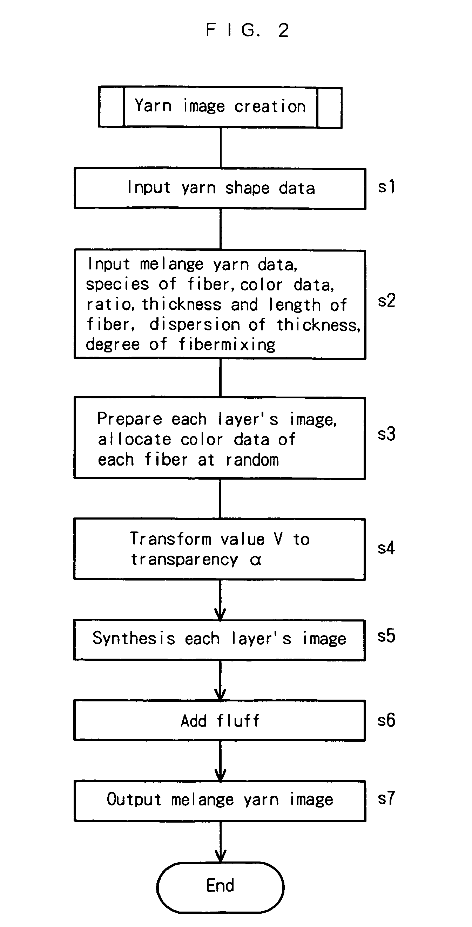

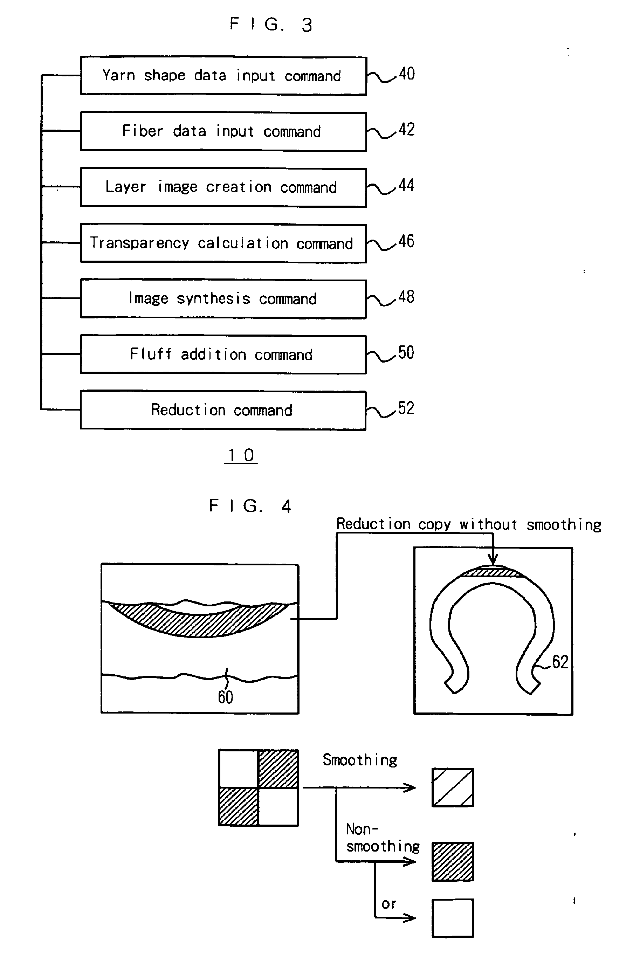

Fig. 2 shows a yarn image creation algorithm, and Fig. 3 shows a yarn image creation program. In a step 1 of Fig. 2, yarn shape data are input, and a yarn shape data input command 40 serves as a command for this purpose. In a step 2, mélange yarn data, including the fiber types, the color data thereof, the ratios, fiber thickness, fiber length, thickness dispersion, degree of mixing, and so on, are input, and a fiber data input command 42 serves as the corresponding command. In a step 3 of Fig. 2, an image is created for each layer of the mélange yarn, and the color data of each fiber are allocated at random in the fiber direction. A layer image creation command 44 shown in Fig. 3 serves as the corresponding command. In a step 4 of Fig. 2, the fiber value V is transformed into the transparency α, and a transparency calculation command 46 shown in Fig. 3 serves as the corresponding command. In a step 5 of Fig. 2, the respective layer images are synthesized, and an image synthesis command 48 shown in Fig. 3 serves as the corresponding command.

During image synthesis, assuming that an upper layer is A, a lower layer is B, and the transparency of the upper layer is αA, the color data of the synthesized image are determined from (1-αA) x (R, G, B)A + αA x (R, G, B)B. When three layers images A, B, C exist, the synthesized image may be determined from (1-αA) x (R, G, B)A + αA x {(1-αB) x (R, G, B)B + αB x (R, G, B)C}. Image synthesis may be performed in a similar manner for four or more layers. In accordance with a fluff addition command 50, the color data of each fiber are allocated to each fiber of the fluff model described above in accordance with a predetermined mixing ratio. A step 6 shown in Fig. 2 serves as the corresponding step, and the fluff addition command 50 shown in Fig. 3 serves as the corresponding command. Note that the yarn main body part is also preferably subjected to shadowing, smoothing, and so on. The obtained yarn image is then output as a mélange yarn image (step 7). When a loop simulation or the like is to be performed, the yarn image is reduced to the required size without being smoothed. A reduction command 52 shown in Fig. 3 serves as the command for this purpose.

Fig. 4 shows reduction of an obtained yarn image 60 to a loop image 62. The shaded part of the loop image 62 corresponds to the shaded part of the yarn image 60. As shown on the lower side of Fig. 4, this part comprises two types of fiber (differentiated by shading) which, when smoothed, appear as a single type colored in a halftone of the two fiber types. Therefore, smoothing is not performed, and the yarn image is copied using only the shaded pixels or the non-shaded pixels, as shown on the lower side of Fig. 4, for example. Typically, smoothing is performed during image reduction, and a plurality of pre-reduction pixels corresponding to a single post-reduction pixel are averaged in accordance with the contribution thereof to the post-reduction pixel, for example. A case in which such smoothing is not performed, or in which a specific pre-reduction pixel is provided with a larger contribution than its actual contribution to the post-reduction pixel, is known as non-smoothing reduction.

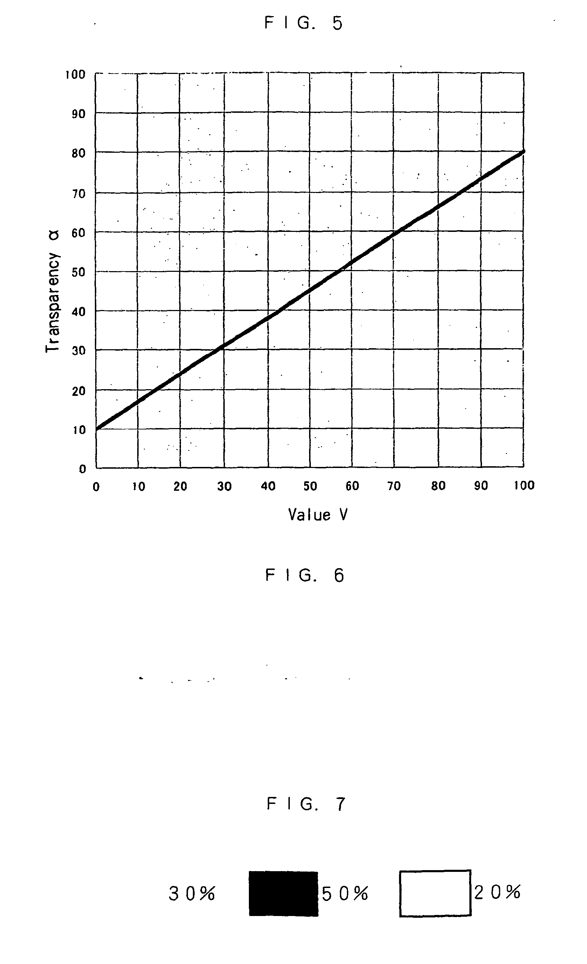

Fig. 5 shows transformation of the value V into the transparency α. The transformation conditions for transforming the value V into the transparency α are stored in a transformation table, for example, and can be referenced by the transparency calculation unit 6 and so on. Transformation of the value V into the transparency α takes a monotonically increasing form, and in this embodiment, the transparency α is directly related to the valve V. The transparency α is preferably made smaller than 100% even in relation to a pure white value of 100%, and the transparency α is preferably made larger than 0 even when the value V is 0 to ensure that the lower side fibers are slightly transparent.

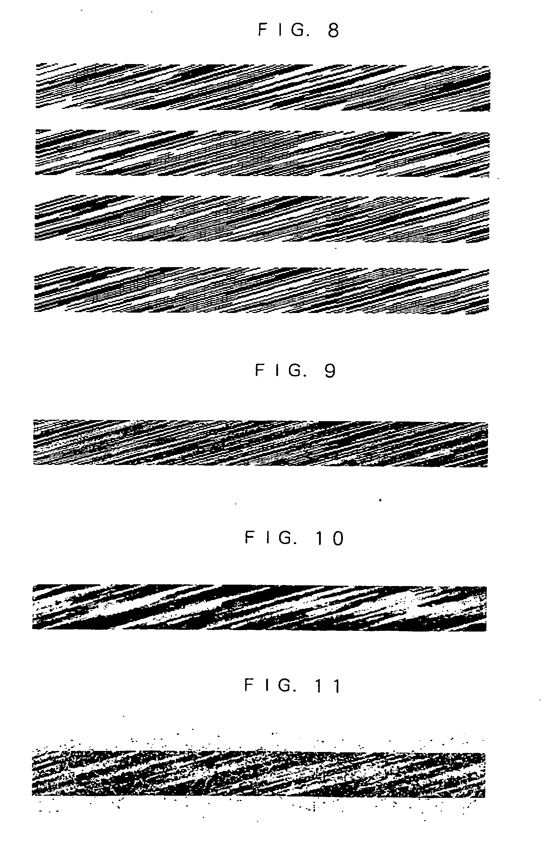

Figs. 6 to 15 show a process for creating a yarn image and a loop simulation image. Fig. 6 shows yarn shape data input by a scanner. The center of the data shows the yarn main body, and the periphery shows the fluff. When inputting the yarn shape data using a scanner, either mélange yarn or normal yarn may be used. Further, instead of inputting the yarn shape data using a scanner, the yarn shape data may be recalled from a database or the like using the count, twist, direction, and so on of the yarn. Fig. 7 shows the color data or value of three types of base fibers used in the mélange yam. The numerals such as 30% denote the mixing ratio. Fig. 8 shows four layer images of the yarn main body, in which the three types of color data are allocated to each fiber at random, in accordance with the mixing ratio and in the arrangement direction of the fiber, using the yarn main body part of the yarn shape data shown in Fig. 6. The length of a continuous section of the color data corresponding to a single fiber may be varied in accordance with the length, thickness dispersion, and so on of the fiber, and unevenness may be applied to the fiber thickness midway along the fiber. Further, the four layer images may be staggered over the same image, for example. The required number of layer images is two to four.

Fig. 9 shows a synthesized image of the four layer images shown in Fig. 8, which has been synthesized using transparency. The transparency is determined for each fiber and obtained by converting the value of the fiber into the transparency. As a result, the texture of the yam, in which the fibers overlap vertically, is depicted. Fig. 10 shows an image obtained by performing smoothing and shadowing on the yarn image in Fig. 9 such that the central portion thereof in the lengthwise direction is light and the upper and lower ends are dark. Note that image smoothing does not necessarily have to be performed. Fig. 11 shows an image obtained by adding fluff to the image in Fig. 10.

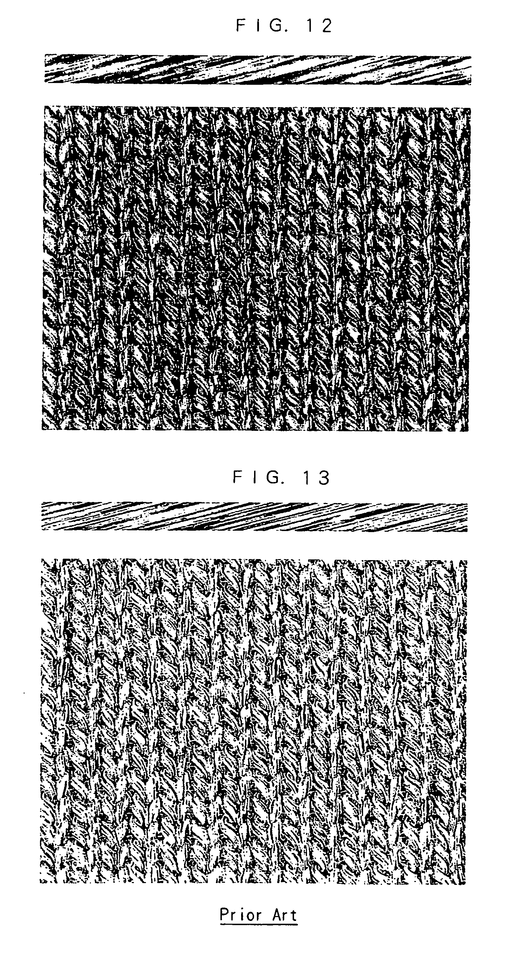

The upper portion of Fig. 12 shows the yarn main body part of a yarn image obtained in the manner described above, while the lower portion of Fig. 12 shows a loop simulation image simulated using the yarn image. Fig. 13 shows the result of a simulation obtained when an image of mélange yarn using the same base fibers is created from a single layer image. In Fig. 13, the vertical overlap of the fibers is not taken into account, and therefore appears whiter than the actual yam. Moreover, color variation is pronounced, leading to a somewhat unnatural image. In contrast, the simulation image in Fig. 12 is realistic and reflects the texture of the mélange yarn.

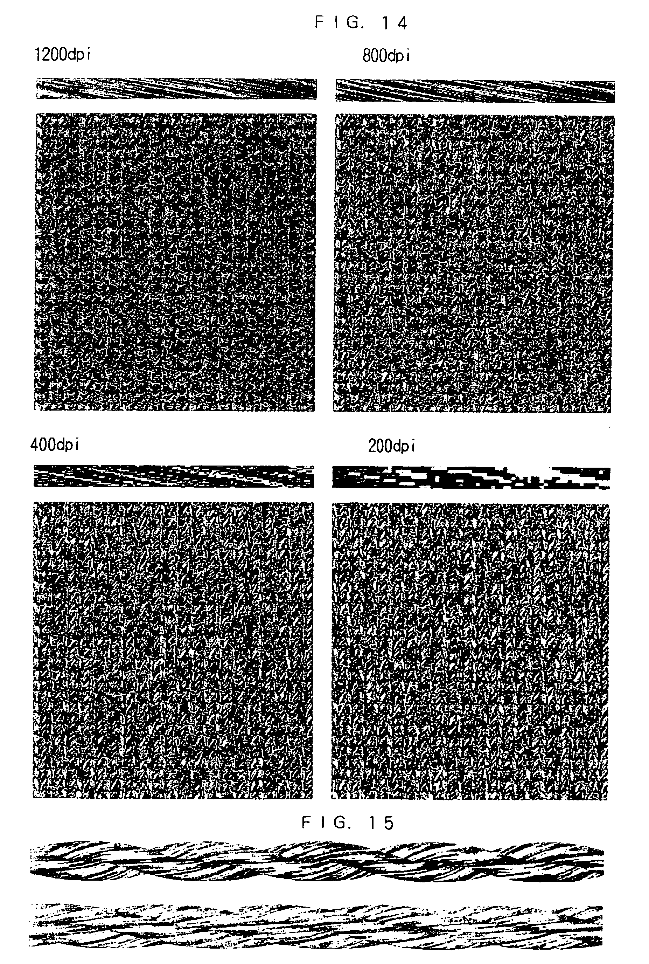

Fig. 14 shows the result of a simulation obtained by varying the resolution of the image in Fig. 12. On the lower right of Fig. 14, the mélange yarn image is created at a resolution of 200dpi, and on the upper left, the yarn image is created at a resolution of 1200dpi. Further, the base fibers are arranged at random in each image such that blocks of untangled fibers of the same type do not occur. At a resolution of 200dpi, the width of a single pixel is 120µm, and since the width of a single fiber is often between approximately 20 and 30µm, a resolution of 200dpi corresponds to an image in which fibers of the same type are not clearly untangled.

At a resolution of 1200dpi, the resolution and the fiber width are substantially equal, and therefore an image in which each fiber appears to be mixed perfectly evenly is obtained. However, since every fiber is mixed perfectly at a resolution of 1200dpi, the unique texture of mélange yarn is not depicted favorably in the loop simulation image. At a resolution of approximately 400dpi, on the other hand, the texture of mélange yarn is expressed most favorably, and through experiment it was learned that a mélange yarn image is preferably created at a resolution between approximately 300 and 800dpi. It was learned from the results shown in Fig. 14 that by varying the resolution of the yarn image, the degree of mixing of the base fibers in the mélange yarn can also be simulated. More specifically, by increasing the resolution of the yarn image, an image in which the base fibers of the mélange yarn are mixed evenly is obtained, and by reducing the resolution, a yarn image in which the base fibers are mixed unevenly is obtained.

Fig. 15 shows yarn images of double twist and triple twist mélange yam. Thus, mélange yarn obtained by twisting single yarns can be simulated in addition to an image of a single yam.

In this embodiment, a yarn image, a loop simulation image, and so on are obtained without actually creating the mélange yarn, and hence mélange yarn design, evaluation of a fiber product using the mélange yarn, and so on are facilitated. Moreover, the mixing ratios of the base fibers, the color data of the base fibers, and so on can be modified easily on the yarn image creation apparatus, and therefore an optimum mélange yarn can be designed easily. In this embodiment, a mélange yarn image is obtained by superposing a plurality of layers, and therefore the texture of the mélange yam, which is produced by overlap between translucent fibers, can be depicted realistically.

Furthermore, by determining the transparency from the fiber value, the transparency can be determined individually and manual work to input the transparency can be eliminated. By converting the fluff into vector data and allocating a single type of base fiber to each vector, the fluff can be depicted realistically. By varying the resolution of the yarn image, the degree of mixing of the base fibers can be depicted realistically. Moreover, by performing non-smoothing reduction during the process to convert the yarn image into a loop simulation image, a loop simulation and the like can be performed while maintaining the unique mélange yarn texture obtained in the yarn image.

## Claims

1. A mélange yarn image creation apparatus for creating a mélange yarn image, **characterized by**:
means for providing a plurality of vertically overlapping image layers in which a plurality of types of fiber having different colors and a predetermined transparency are disposed at random; and
means for creating said mélange yarn image by image-synthesizing said vertically overlapping image layers in accordance with said transparency of each of said fiber types.

2. The mélange yarn image creation apparatus according to claim 1, **characterized in** further comprising means for determining said transparency of each of said fiber types using a value of each of said fiber types and as an increasing function of said value.

3. The mélange yarn image creation apparatus according to claim 1, **characterized in** further comprising means for modifying a resolution of said yarn image in said image layers such that a yarn image in which said fiber types are mixed evenly is created by relatively increasing said resolution of said yarn image, and a yarn image in which said fiber types are mixed unevenly is created by relatively reducing said resolution of said yarn image.

4. A mélange yarn image creation method for creating a mélange yarn image, **characterized in** comprising the steps of:
providing a plurality of vertically overlapping image layers in which a plurality of types of fiber having different colors and a predetermined transparency are disposed at random; and
creating said mélange yarn image by image-synthesizing said vertically overlapping image layers in accordance with said transparency of each of said fiber types.

5. The mélange yarn image creation method according to claim 4, **characterized in that** said transparency of each of said fiber types is determined using a value of each of said fiber types and as an increasing function of said value.

6. A mélange yarn image creation program for creating a mélange yarn image, **characterized in** comprising:
a command for providing a plurality of vertically overlapping image layers in which a plurality of types of fiber having different colors and a predetermined transparency are disposed at random; and
a command for creating said mélange yarn image by image-synthesizing said vertically overlapping image layers in accordance with said transparency of each of said fiber types.

## Patentansprüche

1. Mischgarnerzeugungsvorrichtung zur Erzeugung eines Mischgarnbildes **gekennzeichnet durch**:
Mittel zum Vorsehen einer Vielzahl von vertikal überlappenden Bildschichten, in denen eine Vielzahl von Arten von Fasern mit unterschiedlichen Farben und einer vorbestimmten Transparenz zufällig angeordnet sind; und
Mittel zur Erzeugung des Mischgarnbildes **durch** Bildsynthetisierung der vertikal überlappenden Bildschichten gemäß der Transparenz jeder der Faserarten.

2. Mischgarnbilderzeugungsvorrichtung nach Anspruch 1, **dadurch gekennzeichnet, dass** sie weiter Mittel zur Bestimmung der Transparenz von jeder der Faserarten unter Verwendung eines Wertes von jeder der Faserarten und als eine zunehmende Funktion des Wertes aufweist.

3. Mischgarnbilderzeugungsvorrichtung nach Anspruch 1, die weiter **dadurch gekennzeichnet ist, dass** sie Mittel zum Modifizieren einer Auflösung des Garnbildes in den Bildschichten aufweist, so dass ein Garnbild, in dem die Faserarten gleichmäßig vermischt sind, durch relatives Steigern der Auflösung des Garnbildes erzeugt wird und dass ein Garnbild, in dem die Faserarten ungleichmäßig vermischt sind, durch relatives Verringern der Auflösung des Garnbildes erzeugt wird.

4. Mischgarnbilderzeugungsverfahren zur Erzeugung eines Mischgarnbildes, **dadurch gekennzeichnet, dass** es folgende Schritte aufweist:
Vorsehen einer Vielzahl von vertikal überlappenden Bildschichten, in denen eine Vielzahl von Faserarten mit unterschiedlichen Farben und einer vorbestimmten Transparenz zufällig angeordnet sind; und
Erzeugen des Mischgarnbildes durch Bildsynthetisierung der vertikal überlappenden Bildschichten gemäß der Transparenz von jeder der Faserarten.

5. Mischgarnbilderzeugungsverfahren nach Anspruch 4, **dadurch gekennzeichnet, dass** die Transparenz von jeder der Faserarten unter Verwendung eines Wertes von jeder der Faserarten und als eine zunehmende Funktion des Wertes bestimmt wird.

6. Mischgarnbilderzeugungsprogramm zum Erzeugen eines Mischgarnbildes, **dadurch gekennzeichnet, dass** es Folgendes aufweist:
einen Befehl zum Vorsehen einer Vielzahl von vertikal überlappenden Bildschichten, in denen eine Vielzahl von Faserarten mit unterschiedlichen Farben und mit einer vorbestimmten Transparenz zufällig angeordnet sind; und
einen Befehl zum Erzeugen des Mischgarnbildes durch Bildsynthetisierung der vertikal überlappenden Bildschichten gemäß der Transparenz von jeder der Faserarten.

## Revendications

1. Appareil de création d'image de fil mélangé destiné à créer une image de fil mélangé, **caractérisé par** :
des moyens pour fournir une pluralité de couches d'images superposées verticalement dans lesquelles plusieurs types de fibre ayant différentes couleurs et une transparence prédéterminée sont disposés de façon aléatoire ; et
des moyens pour créer l'image de fil mélangé par une synthèse d'image des couches d'images superposées verticalement conformément à la transparence de chacun des types de fibre.

2. Appareil de création d'image de fil mélangé selon la revendication 1, **caractérisé en ce qu'**il comprend en outre des moyens pour déterminer la transparence de chacun des types de fibre en utilisant une valeur de chacun des types de fibre et selon une fonction croissante de cette valeur.

3. Appareil de création d'image de fil mélangé selon la revendication 1, **caractérisé en ce qu'**il comprend en outre des moyens pour modifier la résolution de l'image de fil dans les couches d'images de telle sorte qu'une image de fil dans laquelle les types de fibre sont mélangés régulièrement est créée en augmentant relativement la résolution de l'image de fil, et une image de fil dans laquelle les types de fibre sont mélangés de façon non régulière est créée en réduisant relativement la résolution de l'image de fil.

4. Procédé de création d'image de fil mélangé pour créer une image de fil mélangé, **caractérisé en ce qu'**il comprend les étapes suivantes :
fournir une pluralité de couches d'images superposées verticalement dans lesquelles plusieurs types de fibre ayant différentes couleurs et une transparence prédéterminée sont disposés de façon aléatoire ; et
créer l'image de fil mélangé par une synthèse d'image des couches d'images superposées verticalement conformément à la transparence de chacun des types de fibre.

5. Procédé de création d'image de fil mélangé selon la revendication 4, **caractérisé en ce que** la transparence de chacun des types de fibre est déterminée en utilisant une valeur de chacun des types de fibre et selon une fonction croissante de cette valeur.

6. Programme de création d'image de fil mélangé pour créer une image de fil mélangé, **caractérisé en ce qu'**il comprend :
une commande pour fournir une pluralité de couches d'images superposées verticalement dans lesquelles plusieurs types de fibre ayant différentes couleurs et une transparence prédéterminée sont disposés de façon aléatoire ; et
une commande pour créer l'image de fil mélangé par une synthèse d'image des couches d'images superposées verticalement conformément à la transparence de chacun des types de fibre.
